# EUROPEAN PATENT APPLICATION

(11) **EP 4 611 090 A1**
(43) Date of publication of application: **03.09.2025**
(21) Application number: 23882357.9
(22) Date of filing: 03.10.2023
(51) Int. Cl.: H01M 10/052, H01M 4/36, H01M 4/38, H01M 4/505, H01M 4/525, H01M 4/583

(54) **NON-AQUEOUS ELECTROLYTE SECONDARY BATTERY**

(30) Priority: 24.10.2022 JP 2022170058
(71) Applicant: Panasonic Intellectual Property Management Co., Ltd., Kadoma-shi, Osaka 571-0057 (JP)
(72) Inventor: OKUNO, Yukiho, Kadoma-shi, Osaka 571-0057 (JP); SATO, Yosuke, Kadoma-shi, Osaka 571-0057 (JP); SAKATA, Motohiro, Kadoma-shi, Osaka 571-0057 (JP)
(74) Representative: Eisenführ Speiser
(86) International application number: PCT/JP2023/036005
(87) International publication number: WO 2024/090148

(57) **Abstract**

In a non-aqueous electrolyte secondary battery according to an embodiment, a positive electrode includes a lithium-containing transition metal composite oxide and a sulfonic acid compound present on the surface of particles of the composite oxide. The sulfonic acid compound is represented by formula (I). In the formula, A is a Group 1 or Group 2 element, R is a hydrocarbon group, and n is 1 or 2. A negative electrode includes a silicon-containing material (50). The silicon-containing material (50) contains an ion-conducting phase (51) and a Si phase (52) dispersed in the ion-conducting phase (50), and the size of the Si phase (52) is 110 nm or less.

## Description

### TECHNICAL FIELD

The present disclosure relates to a non-aqueous electrolyte secondary battery.

### BACKGROUND ART

Patent Literature 1 proposes an active material in which a surface layer including a lithium sulfonate compound is formed on particle surfaces of lithium titanate mainly containing Li₄Ti₅O₁₂. Patent Literature 1 describes that use of this active material for a negative electrode active material may inhibit change in resistance before and after storage of a charged battery.

### CITATION LIST

### PATENT LITERATURE

PATENT LITERATURE 1: Japanese Unexamined Patent Application Publication No. 2018-6164

### SUMMARY

It is an important challenge in the non-aqueous electrolyte secondary battery to improve output characteristics and cycle characteristics while keeping high capacity. The conventional art including Patent Literature 1 cannot sufficiently deal with the above challenge, and still has large room for improvement.

A non-aqueous electrolyte secondary battery according to the present disclosure is a non-aqueous electrolyte secondary battery comprising: a positive electrode; a negative electrode; and a non-aqueous electrolyte, wherein the positive electrode includes a lithium-containing transition metal composite oxide and a sulfonate compound present on particle surfaces of the composite oxide, and the sulfonate compound is a compound represented by a formula (I), 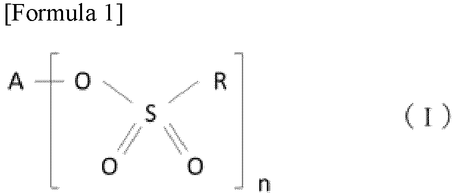 wherein A is a group I element or a group II element, R is a hydrocarbon group, and n is 1 or 2. The negative electrode includes a silicon-containing material. The silicon-containing material includes an ion-conductive phase and Si phases dispersed in the ion-conductive phase, and sizes of the Si phases are less than or equal to 110 nm.

The non-aqueous electrolyte secondary battery according to the present disclosure has high capacity and excellent output characteristics and cycle characteristics.

### BRIEF DESCRIPTION OF DRAWING

FIG. 1 is a sectional view of a non-aqueous electrolyte secondary battery of an example of an embodiment.
FIG. 2 is a view illustrating a particle cross section of a silicon-containing material of an example of an embodiment.

### DESCRIPTION OF EMBODIMENTS

The present inventors have made investigation to consequently find that the non-aqueous electrolyte secondary battery having high capacity and low resistance may be achieved by presence of the sulfonate compound represented by the formula (I) on particle surfaces of a lithium-containing transition metal composite oxide used as a positive electrode active material. This is presumably because the sulfonate compound can function to reduce reaction resistance of the positive electrode and increase charge-discharge depth. However, the increased charge-discharge depth by reducing the reaction resistance of the positive electrode causes a new problem of deterioration of cycle characteristics. Such deterioration of the cycle characteristics is considered to be mainly caused by increase in expansion and contraction of the negative electrode mixture layer due to the increased charge-discharge depth to cause an insufficient state of diffusion of an electrolyte liquid in the negative electrode mixture layer and a non-uniformized battery reaction.

Accordingly, the present inventors have successfully improved output characteristics and cycle characteristics while keeping high capacity by using a lithium-containing transition metal composite oxide having a specific sulfonate compound adhering to the particle surfaces, as the positive electrode active material, and by using a silicon-containing material in which Si phases having a size of less than or equal to 110 nm are dispersed in an ion-conductive phase, as the negative electrode active material. The non-aqueous electrolyte secondary battery according to the present disclosure may reduce the expansion and contraction of the negative electrode mixture layer even with the increased charge-discharge depth of the negative electrode. This is considered to improve the cycle characteristics.

The sulfonate compound represented by the above formula (I) specifically functions to reduce the reaction resistance of the positive electrode and increase the charge-discharge depth of the positive electrode when applied for the particle surfaces of the lithium-containing transition metal composite oxide. However, only applying the sulfonate compound for the positive electrode cannot achieve the battery having high capacity and excellent output characteristics and cycle characteristics. As a result of the investigation, the present inventors have found that it is important to use the specific silicon-containing material as the negative electrode active material in order to achieve such a battery, as noted above. Setting the size of the Si phase of the silicon-containing material to be less than or equal to 110 nm specifically improves the cycle characteristics compared with a case of using a silicon-containing material having a size of the Si phase of greater than 110 nm.

Hereinafter, an example of embodiments of the non-aqueous electrolyte secondary battery according to the present disclosure will be described in detail with reference to the drawings. The scope of the present disclosure includes configurations composed of selective combinations of constitutional elements of a plurality of embodiments and modified examples described below.

In embodiments described below, a non-aqueous electrolyte secondary battery 10, which is a cylindrical battery in which a wound electrode assembly 14 is housed in a bottomed cylindrical exterior housing can 16, will be exemplified, but the exterior body of the battery is not limited to the cylindrical exterior housing can. Examples of other embodiments of the non-aqueous electrolyte secondary battery according to the present disclosure include a rectangular battery comprising a rectangular exterior housing can, a coin battery comprising a coin-shaped exterior housing can, and a pouch battery comprising an exterior body constituted with laminated sheets including a metal layer and a resin layer. The electrode assembly is not limited to a wound electrode assembly, and may be a stacked electrode assembly in which a plurality of positive electrodes and a plurality of negative electrodes are alternately stacked via a separator.

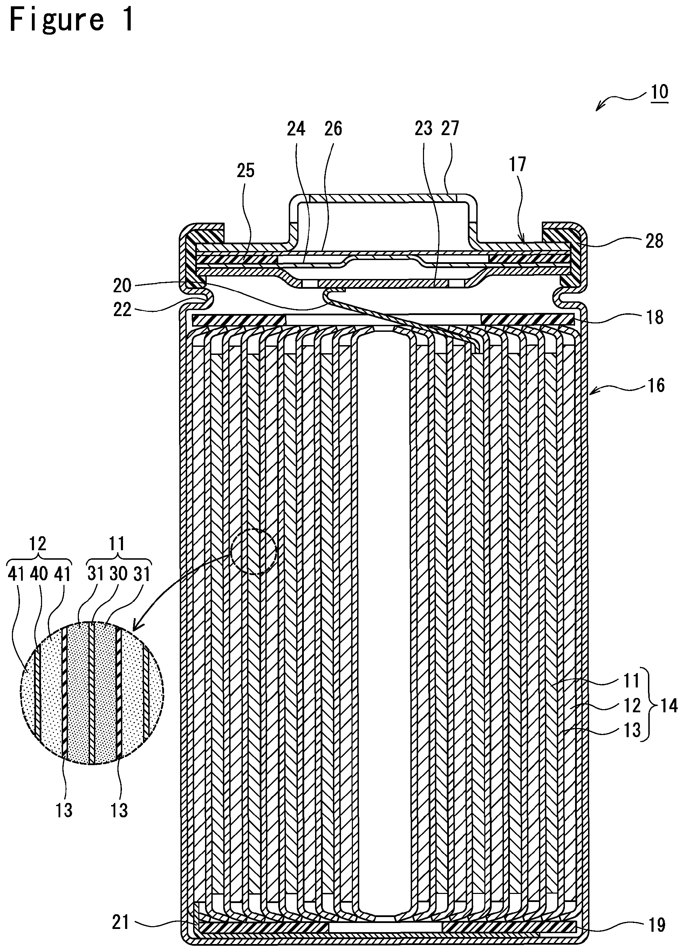

FIG. 1 is a view schematically illustrating an axial cross section of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one end side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte has ion conductivity (for example, lithium-ion conductivity). The non-aqueous electrolyte may be a liquid electrolyte (electrolyte liquid) or may be a solid electrolyte.

The liquid electrolyte (electrolyte liquid) includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent includes ethylene carbonate (EC), ethyl methyl carbonate (EMC), dimethyl carbonate (DMC), diethyl carbonate (DEC), and a mixed solvent thereof. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as LiPF₆ is used, for example.

As the solid electrolyte, a solid or gel polymer electrolyte, an inorganic solid electrolyte, or the like is used, for example. The polymer electrolyte includes a lithium salt and a matrix polymer, or includes a non-aqueous solvent, a lithium salt, and a matrix polymer, for example. As the matrix polymer, a polymer material that absorbs the non-aqueous solvent to gel is used, for example. As the polymer material, a fluororesin, an acrylic resin, a polyether resin, or the like is used, for example. As the inorganic solid electrolyte, a known material for an all-solid lithium-ion secondary battery and the like (for example, an oxide-type solid electrolyte, a sulfide-type solid electrolyte, a halide-type solid electrolyte, or the like) is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side surface portion thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, and the separator 13, which constitute the electrode assembly 14, specifically the positive electrode active material to constitute the positive electrode 11 and the negative electrode active material to constitute the negative electrode 12, will be described in detail.

### [Positive Electrode]

The positive electrode 11 has a positive electrode core 30 and a positive electrode mixture layer 31 disposed on the positive electrode core 30. For the positive electrode core 30, a foil of a metal stable within a potential range of the positive electrode 11, such as aluminum, an aluminum alloy, stainless steel, and titanium, a film in which such a metal is disposed on a surface thereof, and the like may be used. The positive electrode mixture layer 31 includes a positive electrode active material, a conductive agent, and a binder, and is preferably provided on both surfaces of the positive electrode core 30 except for a portion where the positive electrode lead 20 is to be connected. The positive electrode 11 may be produced by, for example, applying a positive electrode mixture slurry including the positive electrode active material, the conductive agent, and the binder on the surface of the positive electrode core 30, and drying and subsequently compressing the coating film to form the positive electrode mixture layer 31 on both the surfaces of the positive electrode core 30.

Examples of the conductive agent included in the positive electrode mixture layer 31 may include carbon black such as acetylene black and Ketjenblack, graphite, carbon nanotube (CNT), carbon nanofiber, graphene, metal fiber, metal powder, and conductive whisker. The conductive agent may be used singly, or a plurality of types thereof may be used in combination.

Examples of the binder included in the positive electrode mixture layer 31 may include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, polyacrylonitrile (PAN), a polyimide, a polyamide, and acrylic resins such as ethylene-acrylic acid copolymer. These resins may be used in combination with carboxymethylcellulose (CMC) or a salt thereof, polyethylene oxide (PEO), and the like. The binder may be used singly, or a plurality of types thereof may be used in combination. Content rates of the conductive agent and the binder are each, for example, greater than or equal to 0.1 mass% and less than or equal to 5 mass% relative to the mass of the positive electrode mixture layer 31.

The positive electrode 11 includes a lithium-containing transition metal composite oxide and a sulfonate compound present on particle surfaces of the composite oxide. The lithium-containing transition metal composite oxide having the sulfonate compound adhering to the particle surfaces functions as the positive electrode active material. The sulfonate compound is a compound represented by the formula (I).

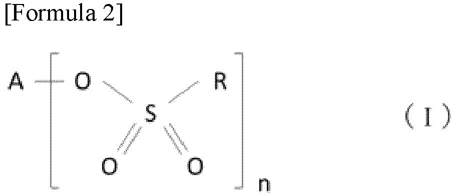

In the formula, A is a group I element or a group II element, R is a hydrocarbon group, and n is 1 or 2.

The sulfonate compound represented by the formula (I) (hereinafter, which may be simply referred to as "sulfonate compound") specifically functions to reduce the reaction resistance of the positive electrode 11 and improve output characteristics of the battery when applied for the particle surfaces of the lithium-containing transition metal oxide. In addition, the reduction in resistance can increase the charge-discharge depth to achieve increase in the capacity. Although the sulfonate compound exhibits the effect at an extremely small amount, the sulfonate compound is preferably present on the particle surfaces of the composite oxide at an amount of greater than or equal to 0.01 mass% relative to the lithium-containing transition metal composite oxide. The content rate of the sulfonate compound is more preferably greater than or equal to 0.05 mass%, and particularly preferably greater than or equal to 0.10 mass% relative to the lithium-containing transition metal composite oxide.

An upper limit of the content rate of the sulfonate compound is not particularly limited, but preferably 2.0 mass%, more preferably 1.5 mass%, and particularly preferably 1.0 mass% relative to the lithium-containing transition metal composite oxide from the viewpoint of achievement of both the output characteristics and the cycle characteristics. An example of a preferable content rate of the sulfonate compound is greater than or equal to 0.05 mass% and less than or equal to 1.50 mass%, greater than or equal to 0.1 mass% and less than or equal to 1.0 mass%, or greater than or equal to 0.2 mass% and less than or equal to 0.7 mass% relative to the lithium-containing transition metal composite oxide.

The positive electrode active material mainly contains the composite particles that are the lithium-containing transition metal composite oxide having the sulfonate compound adhering to the particle surfaces (a component with the highest mass proportion), and may be constituted with substantially only the composite particles. Note that the positive electrode active material may include a composite oxide other than the composite particles, or another compound within a range not impairing the object of the present disclosure. For example, a composite oxide having no sulfonate compound adhering to the particle surfaces may be included as a part of the positive electrode active material.

The lithium-containing transition metal oxide preferably has a layered rock-salt structure. When the sulfonate compound is applied for the composite oxide with the layered rock-salt structure, the above effect becomes more remarkable. Examples of the layered rock-salt structure of the lithium-containing transition metal oxide include a layered rock-salt structure belonging to the space group R-3m and a layered rock-salt structure belonging to the space group C2/m. Among these, the layered rock-salt structure belonging to the space group R-3m is preferable from the viewpoints of increase in the capacity and stability of the crystal structure. The layered rock-salt structure of the lithium-containing transition metal oxide includes a transition metal layer, a Li layer, and an oxygen layer.

The lithium-containing transition metal oxide is a composite oxide containing metal elements such as Ni, Co, Mn, and Al in addition to Li. The metal element constituting the lithium-containing transition metal oxide is at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi, for example. Among these, at least one selected from the group consisting of Co, Ni, and Mn is preferably contained.

The lithium-containing transition metal oxide contains Ni at preferably greater than or equal to 70 mol%, and more preferably greater than or equal to 80 mol% relative to a total number of moles of metal elements excluding Li from the viewpoints of increase in the capacity, and the like. The effect by adding the sulfonate compound is more remarkable when the lithium-containing transition metal oxide having a higher Ni content rate is used. The content rate of Ni may be greater than or equal to 85 mol%, or may be greater than or equal to 90 mol% relative to the total number of moles of the metal elements excluding Li. An upper limit of the Ni content rate is, for example, 95 mol%.

Relative to the total number of moles of the metal elements excluding Li, a content rate of Al is greater than or equal to 4 mol% and less than or equal to 15 mol%, and a content rate of Co is less than or equal to 1.5 mol%, for example. The content rate of Al within the above range stabilizes the crystal structure to contribute to improvement of the cycle characteristics compared with a case where the content rate is out of the above range. Co may not be added substantially, but adding a small amount of Co tends to improve the battery performance. Relative to the total number of moles of the metal elements excluding Li, a content rate of Mn is greater than or equal to 4 mol% and less than or equal to 15 mol%, for example.

The lithium-containing transition metal oxide may be a composite oxide represented by the general formula LiₐNiₓAl_{y}Co_{z}M1_{w}O_{2-b}, wherein 0.8 ≤ a ≤ 1.2, 0.85 ≤ x ≤ 0.95, 0.04 ≤ y ≤ 0.15, 0 ≤ z ≤ 0.015, 0 ≤ w ≤ 0.15, 0 ≤ b < 0.05, x+y+z+w = 1, and M1 is at least one or more elements selected from the group consisting of Mn, Fe, Ti, Si, Nb, Zr, Mo, and Zn. M1 preferably is Mn.

The content rates of the elements constituting the lithium-containing transition metal composite oxide may be measured with an inductively coupled plasma atomic emission spectrometer (ICP-AES), an electron probe micro analyzer (EPMA), an energy dispersive X-ray analyzer (EDX), and the like.

The lithium-containing transition metal composite oxide is of, for example, secondary particles each formed by aggregation of a plurality of primary particles. A volume-based median diameter (D50) of the composite oxide is not particularly limited, and an example thereof is greater than or equal to 3 µm and less than or equal to 30 µm, and preferably greater than or equal to 5 µm and less than or equal to 25 µm. When the composite oxide is of the secondary particles each formed by aggregation of the primary particles, the D50 of the composite oxide means D50 of the secondary particles. The D50 means a particle diameter at which a cumulative frequency is 50% from a smaller particle diameter side in volume-based particle size distribution. The particle size distribution of the composite oxide (the same applies to a case of the negative electrode active material) may be measured by using a laser diffraction-type particle size distribution measuring device (for example, MT3000II, manufactured by MicrotracBEL Corp.) with water as a dispersion medium.

An average particle diameter of the primary particles constituting the lithium-containing transition metal composite oxide is, for example, greater than or equal to 0.05 µm and less than or equal to 1 µm. The average particle diameter of the primary particles is calculated by averaging diameters of circumscribed circles in the primary particles extracted by analyzing a scanning electron microscope (SEM) image of a cross section of the secondary particles.

The sulfonate compound present on the particle surfaces of the lithium-containing transition metal composite oxide is the compound represented by the formula (I), as noted above.

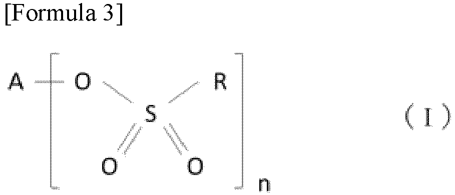

In the formula, A is a group I element or a group II element, R is a hydrocarbon group, and n is 1 or 2. A preferably is a group I element. Among these, Li or Na is more preferable, and Li is particularly preferable.

In the formula (I), R preferably is an alkyl group. The number of carbon atoms in the alkyl group is preferably less than or equal to 5, and more preferably less than or equal to 3. From the viewpoints of reduction in the reaction resistance and the like, a preferable example of R is an alkyl group having less than or equal to 3 carbon atoms, and specifically preferably a methyl group. In R, some of hydrogen bonded to carbon may be replaced with fluorine. In the formula (I), n preferably is 1.

Specific examples of the sulfonate compound include lithium methanesulfonate, lithium ethanesulfonate, lithium propanesulfonate, sodium methanesulfonate, sodium ethanesulfonate, magnesium methanesulfonate, and lithium fluoromethanesulfonate. Among these, at least one selected from the group consisting of lithium methanesulfonate, lithium ethanesulfonate, and sodium methanesulfonate are preferable, and lithium methanesulfonate is particularly preferable.

The sulfonate compound is uniformly present on the entire particle surfaces of the lithium-containing transition metal composite oxide, for example. The presence of the sulfonate compound on the particle surfaces of the composite oxide may be confirmed by Fourier transform infrared spectrometry (FT-IR). In an infrared absorption spectrum obtained by FT-IR, the positive electrode active material including lithium methanesulfonate has absorption peaks near 1238 cm⁻¹, 1175 cm⁻¹, 1065 cm⁻¹, and 785 cm⁻¹, for example. The peaks near 1238 cm⁻¹, 1175 cm⁻¹, and 1065 cm⁻¹ are peaks attributed to SO stretching vibration derived from lithium methanesulfonate. The peak near 785 cm⁻¹ is a peak attributed to CS stretching vibration derived from lithium methanesulfonate.

Also, in the positive electrode active material including a sulfonate compound other than lithium methanesulfonate, the presence of the sulfonate compound may be confirmed from absorption peaks of the infrared absorption spectrum derived from the sulfonate compound. The presence of the sulfonate compound on the particle surfaces of the lithium-containing transition metal composite oxide may also be confirmed by ICP, atomic absorption spectrometry, X-ray photoelectron spectrometry (XPS), synchrotron XRD measurement, TOF-SIMS, or the like.

The positive electrode active material, which is an example of an embodiment, may be manufactured by the following method. The manufacturing method described here is an example, and the method for manufacturing the positive electrode active material is not limited to this method.

First, a metal oxide containing a metal element such as Ni, Co, Mn, and Al is synthesized. Then, this metal oxide and a lithium compound are mixed and calcined to obtain the lithium-containing transition metal composite oxide. The metal oxide may be synthesized by, for example, while stirring a solution of metal salts including Ni, Co, Mn, and Al adding a solution of an alkali such as sodium hydroxide dropwise to adjust a pH on the alkaline side (for example, greater than or equal to 8.5 and less than or equal to 12.5) to precipitate (coprecipitate) a composite hydroxide including the metal elements such as Ni, Co, Mn, and Al and thermally treating this composite hydroxide. The thermal treatment temperature is not particularly limited, and may be greater than or equal to 300°C and less than or equal to 600°C as an example.

Examples of the lithium compound include Li₂CO₃, LiOH, Li₂O₂, Li₂O, LiNO₃, LiNO₂, Li₂SO₄, LiOH.H₂O, LiH, and LiF. The metal oxide and the lithium compound are mixed so that a mole ratio between the metal elements in the metal oxide and Li in the lithium compound is, for example, greater than or equal to 1:0.98 and less than or equal to 1:1.1. When the metal oxide and the lithium compound are mixed, another metal raw material may be added as necessary.

The mixture of the metal oxide and the lithium compound is calcined under an oxygen atmosphere, for example. The mixture may be calcined via a plurality of temperature-raising processes. The calcining step includes, for example: a first temperature-raising step of raising a temperature at a temperature-raising rate of greater than or equal to 1.0 °C/min and less than or equal to 5.5 °C/min to greater than or equal to 450°C and less than or equal to 680°C; and a second temperature-raising step of raising a temperature at a temperature-raising rate of greater than or equal to 0.1 °C/min and less than or equal to 3.5 °C/min to a temperature of greater than 680°C. The highest reaching temperature in the calcining step may be set at greater than or equal to 700°C and less than or equal to 850°C, and this temperature may be held for a time of greater than or equal to 1 hour and less than or equal to 10 hours.

Then, the calcined product (lithium-containing transition metal composite oxide) is washed with water and dehydrated to obtain a cake-like composition. This washing step removes the remained alkali component. The washing with water and the dehydration may be performed by conventionally known methods. Subsequently, the cake-like composition is dried to obtain a powdery composition. The drying step may be performed under a vacuum atmosphere. An example of the drying conditions is at a temperature of greater than or equal to 150°C and less than or equal to 400°C for greater than or equal to 0.5 hours and less than or equal to 15 hours.

The sulfonate compound is added into the cake-like composition obtained in the washing step or the powdery composition obtained in the drying step, for example. In this case, a sulfonic acid solution may be added instead of the sulfonate compound or together with the sulfonate compound. This yields the positive electrode active material having the sulfonate compound adhering to the particle surfaces of the lithium-containing transition metal composite oxide. The sulfonate compound may be added as an aqueous dispersion. The sulfonic acid solution is preferably an aqueous solution of a sulfonic acid. A concentration of the sulfonic acid in the sulfonic acid solution is, for example, greater than or equal to 0.5 mass% and less than or equal to 40 mass%.

Since the lithium compound remains in the cake-like composition at a certain degree, adding the sulfonic acid solution into the cake-like composition allows Li dissolved in water in the cake to react with the sulfonic acid to obtain the lithium sulfonate.

### [Negative Electrode]

The negative electrode 12 has a negative electrode core 40 and a negative electrode mixture layer 41 disposed on the negative electrode core 40. For the negative electrode core 40, a foil of a metal stable within a potential range of the negative electrode 12, such as copper, a copper alloy, stainless steel, nickel, and a nickel alloy, a film in which such a metal is disposed on a surface thereof, and the like may be used. The negative electrode mixture layer 41 includes a negative electrode active material and a binder, and is preferably provided on both surfaces of the negative electrode core 40 except for a portion where the negative electrode lead 21 is to be connected. The negative electrode 12 may be produced by, for example, applying a negative electrode mixture slurry including the negative electrode active material and the binder on the surface of the negative electrode core 40, and drying and subsequently compressing the coating film to form the negative electrode mixture layer 41 on both the surfaces of the negative electrode core 40. The negative electrode mixture layer 41 may include a conductive agent such as CNT.

For the binder included in the negative electrode mixture layer 41, a fluorine-containing resin, an olefin resin, PAN, a polyimide, a polyamide, an acrylic resin, or the like may be used as in the case of the positive electrode 11, but polyvinyl acetate, styrene-butadiene rubber (SBR), or the like may be used. Among these, SBR is preferably used. The binder may be used singly, or a plurality of types thereof may be used in combination. A content rate of the binder is, for example, greater than or equal to 0.1 mass% and less than or equal to 5 mass% relative to the mass of the negative electrode mixture layer 41. The negative electrode mixture layer 41 preferably includes CMC or a salt thereof, polyacrylic acid (PAA) or a salt thereof, polyvinyl alcohol (PVA), or the like. These materials function as a thickener in a negative electrode mixture slurry.

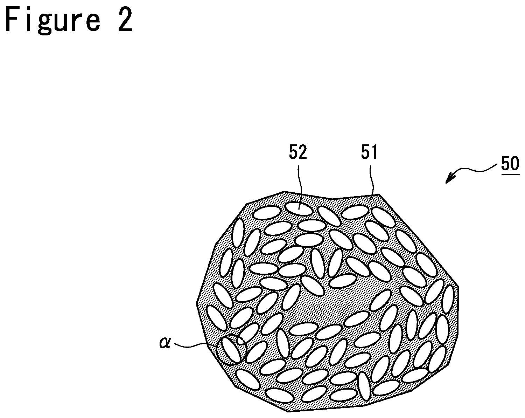

FIG. 2 is a view schematically illustrating a particle cross section of a silicon-containing material 50. The negative electrode 12 includes the silicon-containing material 50 having the particle cross section as illustrated in FIG. 2. The silicon-containing material 50 is included in the negative electrode mixture layer 41, and functions as the negative electrode active material that occludes and releases Li ions during charge and discharge of the battery. The silicon-containing material 50 includes an ion-conductive phase 51 and Si phases 52 dispersed in the ion-conductive phase 51. A size of the Si phase 52 is less than or equal to 110 nm. In the non-aqueous electrolyte secondary battery 10 applying the above sulfonate compound for the positive electrode 11, the cycle characteristics specifically change beyond the Si phase size of 110 nm. When the size of the Si phase 52 of the silicon-containing material 50 is less than or equal to 110 nm, the cycle characteristics are specifically improved.

In the negative electrode 12, only the silicon-containing material 50 may be used as the negative electrode active material, but the negative electrode 12 preferably includes the carbon material and the silicon-containing material 50. Use of the carbon material and the silicon-containing material 50 in combination easily achieves both high capacity and excellent cycle characteristics. The negative electrode 12 may include, for example, a silicon-containing material other than the silicon-containing material 50, a material containing another element that constitutes an alloy with Li, or the like as the negative electrode active material, but the negative electrode 12 in the present embodiment includes substantially only the carbon material and the silicon-containing material 50.

A content rate of the carbon material is preferably higher than a content rate of the silicon-containing material 50. The content rate of the silicon-containing material 50 is preferably less than or equal to 40 mass%, more preferably less than or equal to 35 mass%, and particularly preferably less than or equal to 30 mass% based on the total mass of the negative electrode active material from the viewpoint of improvement of the cycle characteristics. In the non-aqueous electrolyte secondary battery in which the sulfonate compound is added to the positive electrode 11, a case where the silicon-containing material 50 is completely absent deteriorates not only the battery capacity but also the cycle characteristics. The content rate of the silicon-containing material 50 is preferably greater than or equal to 5 mass% based on the total mass of the negative electrode active material from the viewpoint of increasing capacity and improving the cycle characteristics.

An example of a preferable range of the content rate of the silicon-containing material 50 is greater than or equal to 5 mass% and less than or equal to 35 mass%, and more preferably greater than or equal to 5 mass% and less than or equal to 30 mass% or greater than or equal to 5 mass% and less than or equal to 25 mass% based on the total mass of the negative electrode active material. As noted above, the negative electrode 12 may include a silicon-containing material other than the silicon-containing material 50 within a range not impairing the object of the present disclosure. For example, the size of the Si phase of the silicon-containing material included in the negative electrode 12 may be less than or equal to 110 nm in average, and a silicon-containing material having a size of the Si phase of greater than 110 nm may be included.

The carbon material that functions as the negative electrode active material is, for example, at least one selected from the group consisting of natural graphite, artificial graphite, soft carbon, and hard carbon. Among these, at least artificial graphite such as massive artificial graphite (MAG) or graphitized mesophase-carbon microbead (MCMB); natural graphite such as flake graphite, massive graphite, or amorphous graphite; or a mixture thereof is preferably used as the carbon material. A volume-based D50 of the carbon material is, for example, greater than or equal to 1 µm and less than or equal to 30 µm, and preferably greater than or equal to 5 µm and less than or equal to 25 µm.

The soft carbon and the hard carbon are classified as amorphous carbon in which a graphite crystal structure is not developed. More specifically, the amorphous carbon means a carbon content with a d(002) spacing by X-ray diffraction of greater than or equal to 0.342 nm. The soft carbon is also called as easily graphitized carbon, which is carbon easily graphitized by a high-temperature treatment compared with the hard carbon. The hard carbon is also called as hardly graphitized carbon. For the configuration of the present invention, the soft carbon and the hard carbon are not necessarily distinguished clearly. As the negative electrode active material, graphite; and the amorphous carbon of at least one of the soft carbon and the hard carbon may be used in combination.

As noted above, the silicon-containing material 50 includes the ion-conductive phase 51 and the Si phases 52 dispersed in the ion-conductive phase 51. The silicon-containing material 50 is of composite particles constituted with the ion-conductive phase 51 and the Si phases 52. D50 of the silicon-containing material 50 is typically smaller than D50 of the graphite. The volume-based D50 of the silicon-containing material 50 is, for example, greater than or equal to 1 µm and less than or equal to 20 µm, or greater than or equal to 1 µm and less than or equal to 15 µm. The silicon-containing material 50 may be used singly, or may be used in combination of two or more thereof.

The ion-conductive phase 51 is, for example, at least one selected from the group consisting of a silicate phase, a carbon phase, a silicide phase, and a silicon oxide phase. The silicide phase is a phase of a compound composed of Si and an element more electrically positive than Si, and an example thereof includes NiSi, Mg₂Si, and TiSi₂. The Si phase 52 is formed by Si dispersed as fine particles. The ion-conductive phase 51 is a continuous phase constituted by aggregation of particles finer than the Si phase 52.

The size of the Si phase 52 of the silicon-containing material 50 is less than or equal to 110 nm, as noted above. An average value of sizes of the Si phases 52 included in one particle of the silicon-containing material 50 is preferably less than or equal to 110 nm. The Si phases 52 are dispersed in the ion-conductive phase 51 as fine particles on the particle cross section of the silicon-containing material 50. Thus, the average value of the sizes of the Si phases 52 may be referred to as "the average particle diameter", hereinafter. The average particle diameter of the Si phases is calculated by randomly selecting 100 of the silicon-containing material, photographing a SEM image of the cross section of each particle, and averaging diameters of circumscribed circles α of the Si phases extracted by image analysis. The particle cross section may be produced by a cross-section polisher (CP) method.

In the negative electrode 12, the average particle diameter of the Si phases is less than or equal to 110 nm when the sizes of the Si phases of all the silicon-containing materials included in the negative electrode mixture layer 41 or of 100 Si phases randomly selected from all the silicon-containing materials are measured. Note that, when the average particle diameter of the Si phases of the entirety of the negative electrode mixture layer 41 is less than or equal to 110 nm, a silicon-containing material having an average particle diameter of Si phases of greater than 110 nm may be used. Provided that, when greater than or equal to two types of the material are used, all the materials are preferably the silicon-containing material 50 having an average particle diameter of the Si phases 52 of less than or equal to 110 nm.

The Si phases 52 included in one particle of the silicon-containing material 50 may have an average particle diameter of less than or equal to 110 nm as noted above, but all the particle diameters may be less than or equal to 110 nm. The average particle diameter of the Si phases 52 is preferably less than or equal to 100 nm, more preferably less than or equal to 90 nm, and particularly preferably less than or equal to 80 nm. **In** this case, the particle expansion with charge and discharge may be effectively inhibited while keeping the high capacity, and the effect of improving the cycle characteristics becomes more remarkable.

The average particle diameter of the Si phases 52 may be less than or equal to 50 nm, less than or equal to 30 nm, less than or equal to 20 nm, or less than or equal to 10 nm. A lower limit of the average particle diameter of the Si phases 52 is not particularly limited, and 1 nm, for example. An example of a preferable range of the average particle diameter of the Si phases 52 may be greater than or equal to 1 nm and less than or equal to 50 nm, greater than or equal to 1 nm and less than or equal to 40 nm, greater than or equal to 1 nm and less than or equal to 30 nm, greater than or equal to 5 nm and less than or equal to 30 nm, or greater than or equal to 10 nm and less than or equal to 30 nm. The average particle diameter of the Si phases 52 within the above range increases the effect of improving the cycle characteristics compared with a case where the average particle diameter is out of the above range.

The silicon-containing material 50 may have a conductive layer covering a surface of the ion-conductive phase 51. The conductive layer is constituted with a material having higher conductivity than the ion-conductive phase 51, and forms a good conductive path in the negative electrode mixture layer 41. The conductive layer is, for example, a carbon coating constituted with a conductive carbon material. As the conductive carbon material, carbon black such as acetylene black and Ketjenblack, graphite, formless carbon having low crystallinity (amorphous carbon), and the like may be used. A thickness of the conductive layer is preferably greater than or equal to 1 nm and less than or equal to 200 nm, or greater than or equal to 5 nm and less than or equal to 100 nm with considering achievement of conductivity and diffusability of Li ions toward particle inside. The thickness of the conductive layer may be measured by observing a cross section of the composite material using a SEM or a transmission electron microscope (TEM).

The ion-conductive phase 51 may include at least one selected from the group consisting of a group I element and a group II element of the periodic table. The ion-conductive phase 51 may be a silicon oxide phase doped with Li. The ion-conductive phase 51 may include at least one selected from the group consisting of B, Al, Zr, Nb, Ta, V, Y, Ti, P, Bi, Zn, Sn, Pb, Sb, Co, Er, F, W, and lanthanoids.

A preferable example of the silicon-containing material 50 is composite particles having a sea-island structure in which fine Si (the Si phases 52) is substantially uniformly dispersed in an amorphous silicon oxide phase (the ion-conductive phase 51), and represented by the general formula SiOₓ (0 < x ≤ 2) as the entirety. The main component of silicon oxide may be silicon dioxide. The silicon oxide phase may be doped with Li. A content ratio (x) of oxygen to Si is, for example, 0.5 ≤ x < 2.0, and preferably 0.8 ≤ x ≤ 1.5.

Another example of the preferable silicon-containing material 50 includes composite particles having a sea-island structure in which fine Si is substantially uniformly dispersed in an amorphous silicate phase. A preferable silicate phase is a lithium silicate phase containing Li. The lithium silicate phase is, for example, a phase of a composite oxide represented by the general formula Li_{2z}SiO_{(2+z)} (0 < z < 2). The lithium silicate phase preferably does not include Li₄SiO₄ (Z=2). Li₄SiO₄, which is an unstable compound, reacts with water and exhibits alkalinity, and therefore may modify Si, resulting in deterioration of the charge-discharge capacity. The lithium silicate phase preferably contains Li₂SiO₃ (Z=1) or Li₂Si₂O₅ (Z=1/2) as a main component from the viewpoints of stability, productivity, Li-ion conductivity, and the like.

Another example of a preferable silicon-containing material 50 is of composite particles having a sea-island structure in which fine Si is substantially uniformly dispersed in a carbon phase. The carbon phase is preferably an amorphous carbon phase. The carbon phase may include a crystalline phase component, but preferably includes more amorphous phase component than the crystalline phase component. The amorphous carbon phase is constituted with, for example, a carbon material having greater than 0.34 nm of an average spacing of a (002) face measured by X-ray diffraction. The composite material including the carbon phase may have a conductive layer different from the carbon phase, or may not have the conductive layer.

The silicon-containing material 50 is obtained by, for example, synthesizing SiO₂ nanoparticles from an alkoxysilane as a raw material, then synthesizing a polymer including the SiO₂ nanoparticles inside, carbonizing this polymer, and performing a reduction treatment (for the detail, see Examples described later). In this case, the silicon-containing material 50 is of the composite particles in which fine Si is substantially uniformly dispersed in the amorphous carbon phase. The sizes of the Si phases 52 may be reduced by, for example, subjecting the SiO₂ nanoparticles to a crushing treatment for a long time using a crushing machine such as a bead mill. The crushing is performed continuously for greater than or equal to 100 hours, and performed until the average particle diameter of the SiO₂ nanoparticles reaches the target particle diameter. In this time, the crushing treatment with adding isopropyl alcohol enhances fining of the SiO₂ nanoparticles.

A particle expansion coefficient of the silicon-containing material 50 is preferably less than or equal to 210%, and more preferably less than or equal to 170% from the viewpoint of improvement of the cycle characteristics.

The particle expansion coefficient of the silicon-containing material 50 is measured by the following method.
(1) The evaluation target battery is disassembled and a negative electrode plate is cut, and a single-pole cell in a state where a particle cross section of the silicon-containing material is exposed is produced by using metal Li as a counter electrode and an ionic liquid as an electrolyte liquid.
(2) Under a temperature environment at 25°C, the single-pole cell is charged at 0.002 C until a cell voltage reaches 5 mV, then discharged at 0.05 C until the cell voltage reaches 1.0 V, and a particle cross section of the silicon-containing material is observed in-situ with a SEM.
(3) A particle volume (V1) of the silicon-containing material in the charged state and a particle volume (V2) of the silicon-containing material in the discharged state are determined from change in a particle cross-sectional area of the silicon-containing material to calculate the particle expansion coefficient (V1×100/V2).

An expansion coefficient during charge per discharge capacity of the negative electrode mixture layer 41 is preferably less than or equal to 50%/(mAh/g), and more preferably less than or equal to 48%/(mAh/g). Here, the discharge capacity refers to discharge capacity per gram of the negative electrode active material. In this case, the effect of improving the cycle characteristics becomes more remarkable compared with a case where the expansion coefficient during charge of the negative electrode mixture layer 41 is greater than 550%. The expansion coefficient during charge of the negative electrode mixture layer 41 may be controlled by the amount of the added silicon-containing material 50 and the above particle expansion coefficient. A lower limit of the expansion coefficient during charge per discharge capacity of the negative electrode mixture layer 41 is not particularly limited, and 40%/(mAh/g) as an example. The expansion coefficient during charge of greater than or equal to 40%/(mAh/g) easily **increases** the capacity compared with a case where the expansion coefficient during charge is less than 40%/(mAh/g).

The expansion coefficient during charge per discharge capacity of the negative electrode mixture layer 41 is measured by the following method.
(1) The evaluation target battery is disassembled and a negative electrode is cut, and a single-pole cell is produced by using metal Li as a counter electrode and an ionic liquid as an electrolyte liquid.
(2) Under a temperature environment at 25°C, the single-pole cell is charged at 0.1 C until a cell voltage reaches 5 mV, then discharged at 0.1 C until the cell voltage reaches 1.0 V, and a discharge capacity per gram (mAh/g) of the negative electrode active material is determined.
(3) A thickness (T1) of the negative electrode mixture layer in the charged state and a thickness (T2) of the negative electrode mixture layer in the discharged state are determined to calculate an increasing rate of the thickness (T1×100/T2 - 100), and divided by the discharge capacity per gram (mAh/g) of the active material in the negative electrode mixture to calculate the expansion coefficient in charge per discharge capacity of the negative electrode mixture layer.

### [Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. The separator 13 may have, for example: a multi-layered structure including a thermoplastic resin layer such as a polyolefin and a cellulose fiber layer; a bilayer structure of polyethylene (PE) / polypropylene (PP); or a three-layer structure of PE/PP/PE.

On an interface between the separator 13 and at least one of the positive electrode 11 and the negative electrode 12, a filler layer including an inorganic filler may be disposed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13. On a surface of the separator 13, a highly heat-resistant resin layer (a heat-resistant layer) such as an aramid resin may be disposed. The separator 13 may have a substrate composed of the porous sheet and the filler layer or the heat-resistant layer disposed on the substrate, for example.

### EXAMPLES

Hereinafter, the present disclosure will be further described with Examples, but the present disclosure is not limited to these Examples.

### <Example 1>

### [Synthesis of Positive Electrode Active Material]

A composite hydroxide represented by [Ni_{0.90}Al_{0.05}Mn_{0.05}](OH)₂ obtained by a coprecipitation method was calcined at 500°C for 8 hours to obtain an oxide (Ni_{0.90}Al_{0.05}Mn_{0.05}O₂). Then, LiOH and the composite oxide were mixed so that a mole ratio between Li and a total amount of Ni, Al, and Mn was 1.03:1 to obtain a mixture. This mixture was calcined under an oxygen flow with an oxygen concentration of 95% (a flow rate of 2 mL/min per 10 cm³ and 5 L/min per kilogram of the mixture) at a temperature-raising rate of 2.0 °C/min from room temperature to 650°C, and then calcined at a temperature-raising rate of 0.5 °C/min from 650°C to 780°C to obtain a lithium-containing transition metal composite oxide.

Into the obtained lithium-containing transition metal composite oxide, water was added so that a slurry concentration was 1500 g/L, and the slurry was stirred for 15 minutes and filtered to obtain a cake-like composition. Into this cake-like composition, powdery lithium methanesulfonate was added. An amount of the added lithium methanesulfonate was 0.1 mass% relative to the total mass of the lithium-containing transition metal composite oxide. After adding lithium methanesulfonate, the mixture was dried under a vacuum atmosphere under a condition at 180°C for 2 hours to obtain a positive electrode active material. By Fourier transform infrared spectrometry (FT-IR), the presence of lithium methanesulfonate on the particle surfaces of the composite oxide was confirmed.

### [Production of Positive Electrode]

The positive electrode active material, acetylene black, and polyvinylidene fluoride were mixed at a mass ratio of 98:1:1, and N-methyl-2-pyrrolidone (NMP) was used as a dispersion medium to prepare a positive electrode mixture slurry. Then, the positive electrode mixture slurry was applied on a positive electrode core composed of aluminum foil, the coating film was dried and compressed, and then the positive electrode core was cut to a predetermined electrode size to produce a positive electrode in which a positive electrode mixture layer was formed on both surfaces of the positive electrode core. At a part of the positive electrode, an exposed portion where the surface of the positive electrode core was exposed was provided.

### [Synthesis of Silicon-Containing Material]

In a liquid for mixing ethanol/water/ammonia, tetraethoxysilane (TEOS) and cetyltrimethylammonium bromide (CTAB) were mixed to obtain SiO₂ nanoparticles modified with CTAB. The obtained SiO₂ nanoparticles were subjected to a crushing treatment for 300 hours by using a bead mill with adding isopropyl alcohol. Resorcinol and formaldehyde were further added, and polymerization was performed to obtain polymer particles including the SiO₂ nanoparticles inside. In this time, a ratio between resorcinol and TEOS was about 0.5:1. The obtained polymer particles were dried, and then the polymer was carbonized by heating to 800°C in a nitrogen atmosphere, and mixed with magnesium powder and heated at 650°C in an argon atmosphere to perform a magnesium thermal reduction reaction. MgO was dissolved with an HCl/H₂O/ethanol solution from the particles after the reaction, the resultant was washed with ethanol, and then dried to obtain a mesoporous silicon-containing material in which Si phases were dispersed in an amorphous carbon phase.

From a SEM image including a particle cross section of the obtained silicon-containing material, 100 particles were randomly selected, and an average value (an average particle diameter) of sizes of Si phases was determined by the above method (the same applied Examples and Comparative Examples below). The average particle diameter of the Si phases was 5 nm.

### [Production of Negative Electrode]

As a negative electrode active material, the silicon-containing material and artificial graphite were mixed at a mass ratio of 10:90 to be used. This negative electrode active material, sodium carboxymethylcellulose (CMC-Na), and a dispersion of styrene-butadiene rubber (SBR) were mixed at a solid-content mass ratio of 100:1:1, and water was used as a dispersion medium to prepare a negative electrode mixture slurry. This negative electrode mixture slurry was applied on both surfaces of a negative electrode core composed of copper foil, the coating film was dried, then the coating film was rolled by using a roller, and cut to a predetermined electrode size to obtain a negative electrode in which a negative electrode mixture layer was formed on both the surfaces of the negative electrode core. At a part of the negative electrode, an exposed portion where the surface of the negative electrode core was exposed was provided.

### [Preparation of Non-Aqueous Electrolyte]

Into a mixed solvent in which ethylene carbonate (EC), methyl ethyl carbonate (MEC), and dimethyl carbonate (DMC) were mixed at a volume ratio (25°C) of 3:3:4, LiPF₆ was dissolved at a concentration of 1.2 mol/L to prepare a non-aqueous electrolyte liquid.

### [Production of Test Cell (Non-Aqueous Electrolyte Secondary Battery)]

An aluminum lead was attached to the exposed portion of the positive electrode, and a nickel lead was attached to the exposed portion of the negative electrode. The positive electrode and the negative electrode were spirally wound via a separator made of a polyolefin, and then pressing-formed in a radial direction to produce a flat and wound electrode assembly. This electrode assembly was housed in an exterior body constituted with an aluminum laminate sheet, the non-aqueous electrolyte liquid was injected thereinto, and then an opening portion of the exterior body was sealed to obtain a test cell.

### <Example 2>

A test cell was produced in the same manner as in Example 1 except that, in the synthesis of the positive electrode active material, the amount of the lithium methanesulfonate added relative to the lithium-containing transition metal composite oxide was changed to 0.3 mass%.

### <Example 3>

A test cell was produced in the same manner as in Example 1 except that, in the synthesis of the positive electrode active material, the amount of the lithium methanesulfonate added relative to the lithium-containing transition metal composite oxide was changed to 0.5 mass%.

### <Example 4>

A test cell was produced in the same manner as in Example 1 except that, in the synthesis of the positive electrode active material, the amount of the lithium methanesulfonate added relative to the lithium-containing transition metal composite oxide was changed to 1.0 mass%.

### <Example 5>

A test cell was produced in the same manner as in Example 3 except that the silicon-containing material and the artificial graphite were mixed at a mass ratio of 20:80 to be used as the negative electrode active material.

### <Example 6>

A non-aqueous electrolyte secondary battery was produced in the same manner as in Example 3 except that a silicon-containing material having an average particle diameter of Si phases of 20 nm was used as the negative electrode active material. A synthesis method of this silicon-containing material was as follows.

### [Synthesis of Silicon-Containing Material]

In a liquid for mixing ethanol/water/ammonia, tetraethoxysilane (TEOS) and cetyltrimethylammonium bromide (CTAB) were mixed to obtain SiO₂ nanoparticles modified with CTAB. The obtained SiO₂ nanoparticles were subjected to a crushing treatment for 200 hours by using a bead mill with adding isopropyl alcohol. Resorcinol and formaldehyde were further added, and polymerization was performed to obtain polymer particles including the SiO₂ nanoparticles inside. In this time, a ratio between resorcinol and TEOS was about 0.5:1. The obtained polymer particles were dried, and then the polymer was carbonized by heating to 800°C in a nitrogen atmosphere, and mixed with magnesium powder and heated at 650°C in an argon atmosphere to perform a magnesium thermal reduction reaction. MgO was dissolved with an HCl/H₂O/ethanol solution from the particles after the reaction, the resultant was washed with ethanol, and then dried to obtain a mesoporous silicon-containing material in which Si phases were dispersed in an amorphous carbon phase.

### <Example 7>

A test cell was produced in the same manner as in Example 6 except that the silicon-containing material used in Example 6 and the artificial graphite were mixed at a mass ratio of 20:80 to be used as the negative electrode active material.

### <Example 8>

A test cell was produced in the same manner as in Example 3 except that, in the synthesis of the positive electrode active material, sodium methanesulfonate was used instead of lithium methanesulfonate.

### <Example 9>

A test cell was produced in the same manner as in Example 3 except that, in the synthesis of the positive electrode active material, lithium ethanesulfonate was used instead of lithium methanesulfonate.

### <Example 10>

A non-aqueous electrolyte secondary battery was produced in the same manner as in Example 3 except that a silicon-containing material having an average particle diameter of Si phases of 100 nm was used as the negative electrode active material. A synthesis method of this silicon-containing material was as follows.

### [Synthesis of Silicon-Containing Material]

The silicon-containing material was synthesized in the same manner as in Example 1 except that the SiO₂ nanoparticles were subjected to the crushing treatment for 100 hours by using the bead mill.

### <Example 11>

A non-aqueous electrolyte secondary battery was produced in the same manner as in Example 3 except that a silicon-containing material having an average particle diameter of Si phases of 80 nm was used as the negative electrode active material. A synthesis method of this silicon-containing material was as follows.

### [Synthesis of Silicon-Containing Material]

The silicon-containing material was synthesized in the same manner as in Example 1 except that the SiO₂ nanoparticles were subjected to the crushing treatment for 150 hours by using the bead mill.

### <Comparative Example 1>

A non-aqueous electrolyte secondary battery was produced in the same manner as in Example 1 except that, in the synthesis of the positive electrode active material, lithium methanesulfonate was not used, and a silicon-containing material having an average particle diameter of Si phases of 120 nm was used as the negative electrode active material. A synthesis method of this silicon-containing material was as follows.

### [Synthesis of Silicon-Containing Material]

The silicon-containing material was synthesized in the same manner as in Example 1 except that the SiO₂ nanoparticles were subjected to the crushing treatment for 50 hours by using the bead mill.

### <Comparative Example 2>

A test cell was produced in the same manner as in Example 1 except that, in the synthesis of the positive electrode active material, lithium methanesulfonate was not used.

### <Comparative Example 3>

A test cell was produced in the same manner as in Example 3 except that, in the synthesis of the positive electrode active material, lithium succinate was used instead of lithium methanesulfonate.

### <Comparative Example 4>

A test cell was produced in the same manner as in Example 3 except that, in the synthesis of the positive electrode active material, lithium oxalate was used instead of lithium methanesulfonate.

### <Comparative Example 5>

A test cell was produced in the same manner as in Example 3 except that the silicon-containing material used in Comparative Example 1 was used as the silicon-containing material.

The output characteristics and the cycle characteristics (capacity retention) of each of the test cells of Examples and Comparative Examples were evaluated by the following methods. Table 1 shows the evaluation results. The output characteristics of each of the test cells shown in Table 1 are values relative to the value of the test cell of Comparative Example 2 being 100. A larger value thereof means more excellent output characteristics.

### [Evaluation of Initial Output Characteristics (Discharge Load Characteristics)]

Under a temperature environment at 25°C, the test cell was charged at a constant current of 0.3 It until a battery voltage reached 4.2 V, and then charged at a constant voltage of 4.2 V until a current value reached 0.02 It. Thereafter, the test cell was discharged at a constant current of 0.2 It until the battery voltage reached 2.5 V. Thereafter, the test cell was charged again at a constant current of 0.3 It until the battery voltage reached 4.2 V, and then charged at a constant voltage of 4.2 V until the current value reached 0.02 It. Thereafter, the test cell was discharged at a constant current of 0.5 It until the battery voltage reached 2.5 V. The values of discharge capacity in this time were used to determine the discharge load characteristics by the following formula. Discharge load characteristics (%) = (Discharge capacity at 0.5 It/Discharge capacity at 0.02 It)

### [Evaluation of Cycle Characteristics (Capacity Retention after Cycle Test)]

Under a temperature environment at 25°C, the test cell was charged at a constant current of 0.3 It until a battery voltage reached 4.2 V, and then charged at a constant voltage of 4.2 V until a current value reached 0.02 It. Thereafter, the test cell was discharged at a constant current of 0.5 It until the battery voltage reached 2.5 V. This charge-discharge cycle was specified as one cycle, and performed with 300 cycles. A discharge capacity at the 1st cycle and a discharge capacity at the 300th cycle of the cycle test were determined to calculate capacity retention by the following formula. Capacity retention (%) = (Discharge capacity at 300th cycle/Discharge capacity at 1st cycle) × 100

**[Table 1]**

| | Sulfonate compound | | Si-containing material | | Battery Performance Evaluation | |
|---|---|---|---|---|---|---|
| | Type | Addition rate [mass%] | Content rate [mass%] | Size of Si phase [nm] | Output characteristics | Capacity retention [%] |
| Example 1 | MSL | 0.1 | 10 | 5 | 101.5 | 89.5 |
| Example 2 | MSL | 0.3 | 10 | 5 | 102.0 | 87.9 |
| Example 3 | MSL | 0.5 | 10 | 5 | 102.3 | 87.3 |
| Example 4 | MSL | 1.0 | 10 | 5 | 101.0 | 89.8 |
| Example 5 | MSL | 0.5 | 20 | 5 | 102.6 | 84.8 |
| Example 6 | MSL | 0.5 | 10 | 20 | 102.7 | 90.1 |
| Example 7 | MSL | 0.5 | 20 | 20 | 103.0 | 85.3 |
| Example 8 | MSN | 0.5 | 10 | 5 | 101.0 | 88.7 |
| Example 9 | ESL | 0.5 | 10 | 5 | 101.3 | 88.4 |
| Example 10 | MSL | 0.5 | 10 | 100 | 102.0 | 84.2 |
| Example 11 | MSL | 0.5 | 10 | 80 | 102.0 | 85.1 |
| Comparative Example 1 | - | - | 10 | 120 | 99.8 | 84.5 |
| Comparative Example 2 | - | - | 10 | 5 | 100 | 90.1 |
| Comparative Example 3 | Li succinate | 0.5 | 10 | 5 | 99.8 | 90.4 |
| Comparative Example 4 | Li oxalate | 0.5 | 10 | 5 | 99.4 | 90.9 |
| Comparative Example 5 | MSL | 0.5 | 10 | 120 | 102.0 | 76.7 |

As shown in Table 1, all the test cells of Examples exhibited high discharge load characteristics compared with the test cells of Comparative Examples 1 to 4, and had excellent output characteristics. In addition, all the test cells of Examples exhibited high capacity retention after the cycle test compared with the test cell of Comparative Example 5, and had excellent cycle characteristics. That is, the test cells of Examples achieve both excellent output characteristics and cycle characteristics. As the test cell of Comparative Example 5, it is difficult to keep good cycle characteristics with improved output characteristics, but the test cells of Examples had good cycle characteristics regardless of the high output characteristics.

The test cell of Comparative Example 1, which did not apply the sulfonate compound for the positive electrode and used the silicon-containing compound having an average particle diameter of the Si phases of greater than 110 nm as the negative electrode active material, exhibited low output characteristics compared with the test cells of Examples. Further, the capacity retention of the test cell of Comparative Example 1 was equivalent to that of Example 10 (output characteristics: 102.0), which was the lowest capacity retention among Examples.

Use of the silicon-containing compound having an average particle diameter of the Si phases of greater than 110 nm as the negative electrode active material when using the sulfonate compound for the positive electrode (Comparative Example 5) considerably deteriorates the capacity retention. That is, from Examples and Comparative Example 5, it is understood that the capacity retention is remarkably improved by using the silicon-containing compound having an average particle diameter of the Si phases of less than or equal to 110 nm as the negative electrode active material when using the sulfonate compound for the positive electrode.

When lithium succinate or lithium oxalate was used instead of lithium methanesulfonate (Comparative Examples 3, 4), the output characteristics rather deteriorated compared with the case of adding no acid salt to the positive electrode (Comparative Example 2).

The present disclosure will be further described with the following embodiments.

Constitution 1: A non-aqueous electrolyte secondary battery, comprising: a positive electrode; a negative electrode; and a non-aqueous electrolyte, wherein
the positive electrode includes a lithium-containing transition metal composite oxide and a sulfonate compound present on particle surfaces of the composite oxide, and
the sulfonate compound is a compound represented by a formula (I), 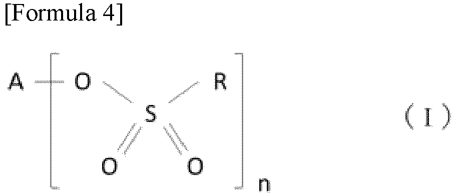
   wherein A is a group I element or a group II element, R is a hydrocarbon group, and n is 1 or 2,
   the negative electrode includes a silicon-containing material, and
   the silicon-containing material includes an ion-conductive phase and Si phases dispersed in the ion-conductive phase, and sizes of the Si phases are less than or equal to 110 nm.

Constitution 2: The non-aqueous electrolyte secondary battery according to Constitution 1, wherein the sulfonate compound is present at an amount of greater than or equal to 0.1 mass% and less than or equal to 1.0 mass% relative to the lithium-containing transition metal composite oxide.

Constitution 3: The non-aqueous electrolyte secondary battery according to Constitution 1 or 2, wherein A in the formula (I) is Li or Na.

Constitution 4: The non-aqueous electrolyte secondary battery according to any one of Constitutions 1 to 3, wherein R in the formula (I) is an alkyl group having less than or equal to 3 carbon atoms.

Constitution 5: The non-aqueous electrolyte secondary battery according to any one of Constitutions 1 to 4, wherein the lithium-containing transition metal composite oxide has a layered rock-salt structure.

Constitution 6: The non-aqueous electrolyte secondary battery according to any one of Constitutions 1 to 5, wherein the negative electrode mixture layer includes a carbon material and the silicon-containing material as a negative electrode active material.

Constitution 7: The non-aqueous electrolyte secondary battery according to any one of Constitutions 1 to 6, wherein the ion-conductive phase is at least one selected from the group consisting of a silicate phase, a carbon phase, a silicide phase, and a silicon oxide phase.

Constitution 8: The non-aqueous electrolyte secondary battery according to any one of Constitutions 1 to 7, wherein the sizes of the Si phases are greater than or equal to 1 nm and less than or equal to 50 nm.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer, 50 Silicon-containing material, 51 Ion-conductive phase, 52 Si phase

## Claims

1. A non-aqueous electrolyte secondary battery, comprising:
a positive electrode;
a negative electrode; and
a non-aqueous electrolyte, wherein
the positive electrode includes a lithium-containing transition metal composite oxide and a sulfonate compound present on particle surfaces of the composite oxide, and
the sulfonate compound is a compound represented by a formula (I), 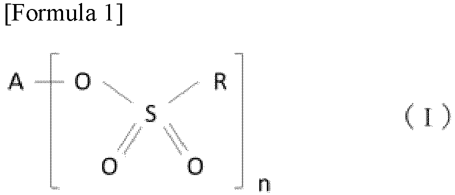
wherein A is a group I element or a group II element, R is a hydrocarbon group, and n is 1 or 2,
the negative electrode includes a silicon-containing material, and
the silicon-containing material includes an ion-conductive phase and Si phases dispersed in the ion-conductive phase, and sizes of the Si phases are less than or equal to 110 nm.

2. The non-aqueous electrolyte secondary battery according to claim 1, wherein the sulfonate compound is present at an amount of greater than or equal to 0.1 mass% and less than or equal to 1.0 mass% relative to the lithium-containing transition metal composite oxide.

3. The non-aqueous electrolyte secondary battery according to claim 1 or 2, wherein A in the formula (I) is Li or Na.

4. The non-aqueous electrolyte secondary battery according to claim 1 or 2, wherein R in the formula (I) is an alkyl group having less than or equal to 3 carbon atoms.

5. The non-aqueous electrolyte secondary battery according to claim 1 or 2, wherein the lithium-containing transition metal composite oxide has a layered rock-salt structure.

6. The non-aqueous electrolyte secondary battery according to claim 1 or 2, wherein the negative electrode includes a carbon material and the silicon-containing material as a negative electrode active material.

7. The non-aqueous electrolyte secondary battery according to claim 1 or 2, wherein the ion-conductive phase is at least one selected from the group consisting of a silicate phase, a carbon phase, a silicide phase, and a silicon oxide phase.

8. The non-aqueous electrolyte secondary battery according to claim 1 or 2, wherein the sizes of the Si phases are greater than or equal to 1 nm and less than or equal to 50 nm.
